# EUROPEAN PATENT SPECIFICATION

(11) **EP 0 284 411 B1**
(45) Date of publication and mention of the grant of the patent: **09.06.1993**
(21) Application number: 88302662.7
(22) Date of filing: 25.03.1988
(51) Int. Cl.: B24B 55/06, B23Q 11/00

(54) **An improved anti-polution design for a bench grinder**
Vorrichtung gegen die Luftverschmutzung bei einer Werkbankschleifmaschine
Dispositif anti-pollution pour meuleuse d'etabli

(30) Priority: 26.03.1987 US 30679
(43) Date of publication of application: 28.09.1988
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- EP-A- 0 232 577
- US-A- 2 236 232
- US-A- 2 291 550
- US-A- 2 763 972

## Description

This invention relates to a bench grinder including a dust collection system and is a development of the grinder disclosed in my prior European patent application No. 86.300920.5 now abandoned.

A bench grinder is a widely applied basic manufacturing tool but conventional bench grinders do not include inexpensive anti-polution equipment. Use of conventional bench grinders causes iron dust to pollute the environment and damage the respiratory organs of a user.

US 2,236,232 discloses an abrasive wheel machine comprising a centrifugal within a pump cover and which communicates with a filter.

US 2,763,972 discloses an abrasive wheel machine having an anti-pollution structure and a tool rest provided with ventilation holes for reducing the wind resistance and enhancing the efficiency of dust collection.

According to the present invention a bench grinder comprises a bench grinder comprising a main housing (200) including a motor having a double-ended motor shaft (203) carrying an abrasive wheel (201,202) at each end, each abrasive wheel being provided with a guard housing (116) secured to the main housing (200) and surrounding the wheel, a dust collecting system comprising a fan housing (101) secured to the guard housing (116) laterally thereof, the guard housing (116) having a tool rest (115,135) located at an opening thereof and an annular cover (112) with a tapered lateral opening (113) formed therein for communication with the fan housing (101), said tapered lateral opening expanding towards said fan housing, and said tool rest having openings (114,134) therein for reducing its wind resistance, the motor shaft (203) extending through the lateral opening in the guard housing (116) and into the fan housing (101), a centrifugal fan (100) carried by an extension of motor shaft (203) in the fan housing (101), adjacent said tapered lateral opening, the fan housing (101) having a portion extending rearwardly therefrom and away from a position at which an operator would use the grinder, a common filter housing (105,125) secured to the main housing (200) rearwardly thereof in close proximity to said motor, the filter housing comprising two sections (105,125) connected to a central connection socket (104) and associated with the respective dust-collection systems, conduit means (110) connecting the rearwardly-extending portion of the fan housing (101) with the filter housing (105,125), the filter housing (105,125) having a plurality of air exhaust openings (107,127) formed therein, and filters (109,129) supported within the respective sections of the filter housing (105,125) by supporting nets (108,128) located inwardly of the air exhaust openings (107,127) therein, the supporting nets (108,128) being located by said central connection socket (104), whereby the fan draws the dust-laden air axially of the motor shaft and through the tapered lateral openings (113) in the annular covers (112) away from said motor (100) and said abrasive wheels (202) and into the fan housings (101), whereby the dust-laden air passes rearwardly into the rearwardly-extending portion of the fan housings (101) and then into the filter housings (105,125), and whereby the air thereafter passes through the filters (109,129) and out of the air exhaust openings (107,127) in the filter housing (105,125).

The grinder according to the invention is designed for exhausting particulate matter from a bench grinder having an abrasive wheel which rotates in a circular direction about an axis of rotation for contacting a workpiece, thereby producing particulate matter which is outwardly-exhausted from the working element along the axis of rotation. Preferably, the filter housing (105,125) has a top semi-cylindrical portion (129) having the air exhaust openings (107,127) formed therein, and wherein the filter (109) is relatively thin and substantially semi-cylindrical and is supported within the top semi-cylindrical portion of the filter housing substantially beneath the air exhaust openings (107,127) formed therein, the axis of said semi-cylindrical filter housing (129) being parallel to the shaft (203) of the motor (200) and abrasive wheel.

Conveniently, a tool rest has ventilation holes which are shaped to reduce the wind resistance at the entrance and enhance anti-polution efficiency of the dust inhalation.

The invention will now be described by way of example with reference to the accompanying drawings in which:
Fig. 1 A disassembled view of an implementation example of this improved design;

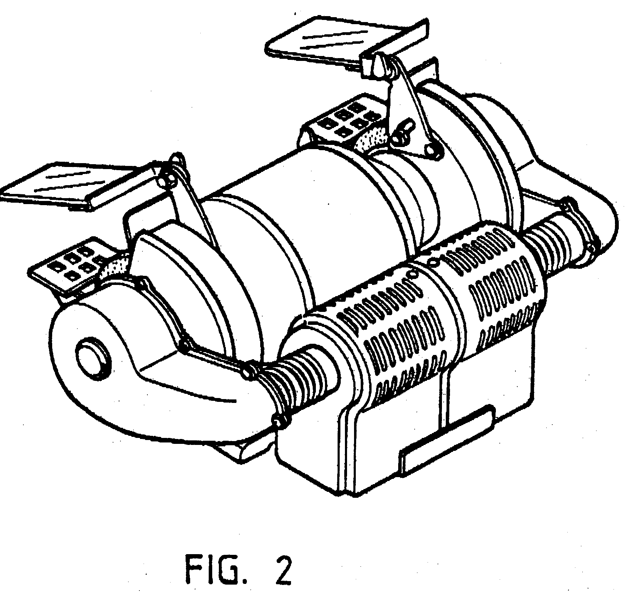

Fig. 2 A solid view of the implementation example after its assembly is completed;

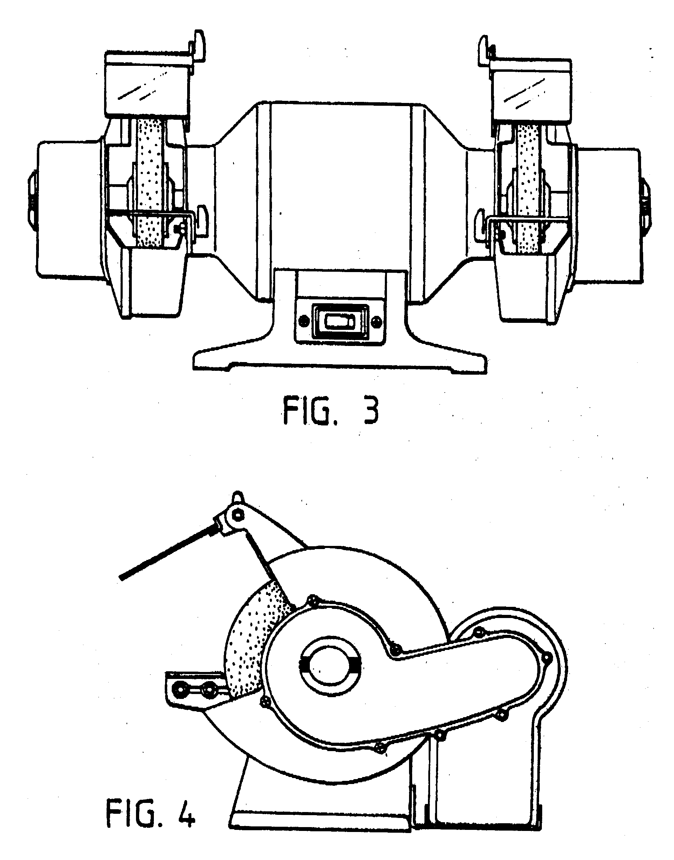

Fig. 3. A front view of the implementation example;

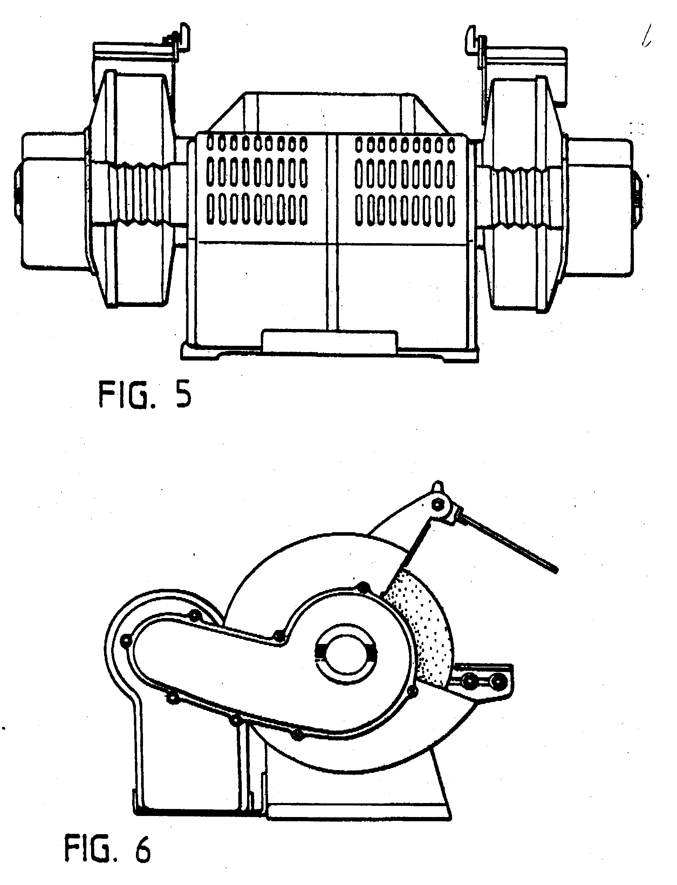

Fig. 4. A right side view of the implementation example;
Fig. 5. A back side view of the implementation example;
Fig. 6. A left side view of the implementation example;

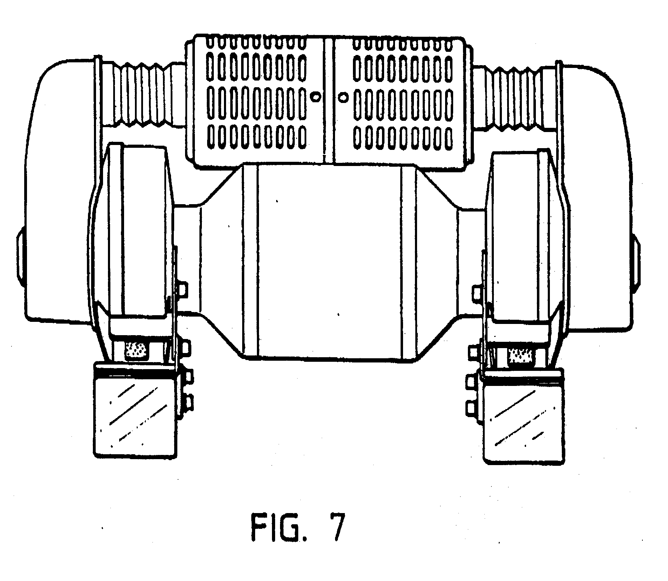

Fig. 7. A top side view of the implementation example; and

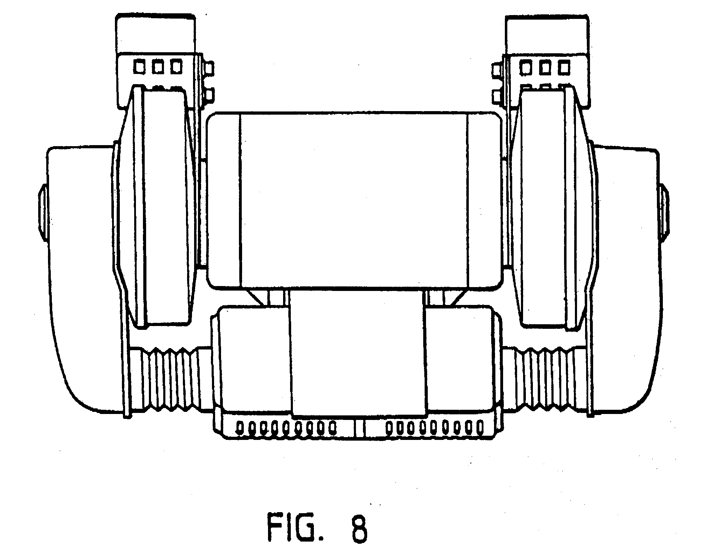

Fig. 8. A bottom side view of the implementation example.

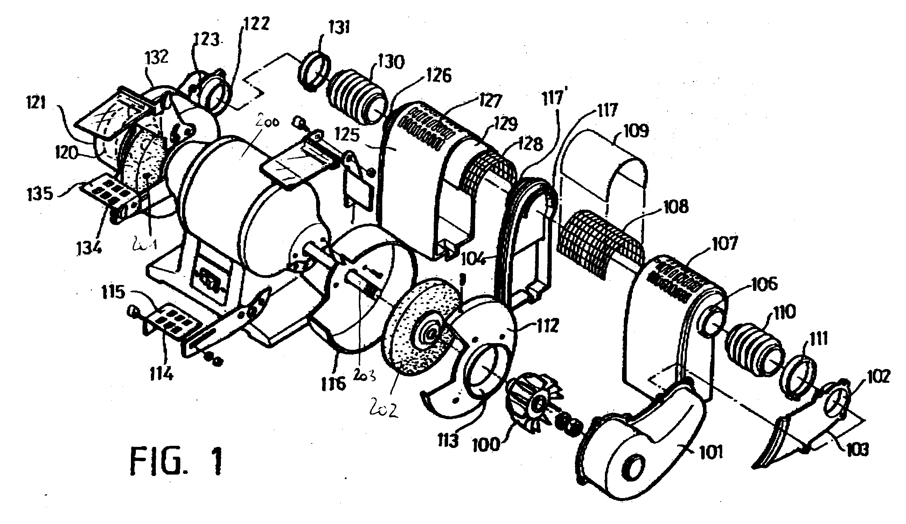

The Fig. 1 is a disassembled view of the bench grinder including an abrasive wheel (a working element), which rotates in a circular direction about an axis of rotation, a driving motor housing and a bottom base.

A wind blowing pump cover 112 is used to connect inner housing 116 of the grinder. The cover 112 and housing 116 together comprise a working element housing. One side has an annular induction opening formed therein which is oriented substantially parallel to the working element. The induction opening includes a centre that is positioned, such that the axis of rotation substantially passes therethrough and an annular, outwardly-extending frusto-conical skirt 113 of which inner part is smaller than the outer part and spreading wider outward is formed about the induction opening. A centrifugal system wind pump 100 is secured to a grinder shaft on which the abrasive wheel (working element) is also secured for concomitant rotational movement therewith.

An extension housing (reservoir housing) 101 is a gyratory shaped cover that is positioned for receiving an outwardly-exhausted current of air having particulate matter therein from the working element housing via the induction opening and the skirt. Its larger round shaped side is used to carry the centrifugal wind pump 100. Its smaller side is used to connect a side cover 103 that has an induction hole (induction aperture) 103; then, an induction hole 102 and a snake pipe 110 are fixed by a fixing ring 111, so that a received current of air having particulate matter therein exists the reservoir housing.

A two sectioned system filter box of filter housing (which may be a unitary structure) is secured to the reservoir housing. This filter housing is an upright, side opening box which consists of a right side 105 and a left side 125 each of which has an entry aperture formed therein. Each entry aperture is aligned in communication with the induction aperture formed in the reservoir opening via snake pipe 110, whereby received current of air having particulate matter therein exists the reservoir through the said induction aperture 102 enters the filter housing.

The air exhaust openings (exhaust apertures) 107 are on the right side 105 and connected with a central connection socket 104. Openings 107 permit the exhausting of a cleaned current of air from the filter housing. Each side of a connection socket has a semi-circle protrusion 117 and shaped to form a snap-on fit for a filter net support 108 and a filter net 109. The filter is thus positioned in the filter housing between the entry and the exhaust apertures. In this fashion, the received current of air having particulate matter therein passes through the filter, whereby the particulate matter is separated from the current of air creating a clean current of air.

On the adjoining side between the above stated inner side housing 116 of the grinder and a motor housing, a grinding point tool rest 115 is attached. The tool rest 115 extends into the grinding point aperture formed in the working element housing where the inner side housing 116 of the grinder and a wind blowing pump cover 112 are connected together. The tool rest 115, includes ventilation holes (apertures) 114, which function to reduce wind resistance, permits a current of air to flow therethrough and enhances anti-pollution efficiency of the dust inhalation.

A similar structure is disposed on the opposite side in which a wind blowing pump cover 132 is used to connect inner housing 136 of an abrasive wheel (working element). Together cover 132 and housing 136 comprise a working element housing. One side thereof has an annular induction opening formed therein which is oriented substantially parallel to the working element. The induction opening includes a centre that is positioned, such that the axis of rotation substantially passes therethrough. An annular outwardly-exhausting frusto-conical skirt 133 of which inner part is smaller than the outer part and spreading wider outward is formed about the induction opening. A centrifugal system wind pump 120 is secured on a grinder shaft on which the abrasive wheel (working element) is also secured for concomitant rotational movement therewith.

An extension housing (reservoir housing) 121 is a gyratory shaped cover that is shaped and positioned annularly to receive the outwardly-exhausted current of air having particulate matter therein from the working element housing via the reduction opening and the skirt. Its larger round shaped side is used to affix a centrifugal wind pump 120. Its smaller side is used to connect a side cover 123 that has an induction hold (induction aperture) 122, then an induction hole 122 and a snake pipe 130 are fixed by a fixing ring 131, so that a received current of air having particulate matter therein exists the reservoir housing.

The right side 125 of a two-part system filter box or filter housing secured to the reservoir housing. This filter housing is an upright, side opening box. The air exhaust opening 127 are on it and connected with a central connection socket 104. The top of a connection socket has a semi-circular protrusion 117. On the inner top of the filter box which is at the left side of 117, there is the same semi-circle protrusion to form a snap-on fit for a filter net supporter 128 and a filter net (filter) 129, so that the filter is positioned in the filter housing between the entry and exhaust apertures. In this fashion, the received current of air having particulate matter therein passes through the filter, whereby the particulate matter is separated from the current of air creating a clean current of air.

On the adjoining side between the above stated inner side housing 136 and a motor housing, a grinding point tool rest 115 is attached. The tool rest 115 extends into the grinding point aperture formed in the working element housing wherein the inner side housing 136 of the grinder and a wind blowing pump cover 132 are connected together. The tool rest 135 includes ventilation holes (apertures) 134 or openings which function to reduce the wind resistance permits a current of air to flow therethrough and enhance anti-pollution efficiency of the dust inhalation.

The above stated anti-polution improvement to a bench grinder provides a very useful anti-polution function.

## Claims

1. A bench grinder comprising a main housing (200) including a motor having a double-ended motor shaft (203) carrying an abrasive wheel (201,202) at each end, each abrasive wheel being provided with a guard housing (116) secured to the main housing (200) and surrounding the wheel, a dust collecting system comprising a fan housing (101) secured to the guard housing (116) laterally thereof, the guard housing (116) having a tool rest (115,135) located at an opening thereof and an annular cover (112) with a tapered lateral opening (113) formed therein for communication with the fan housing (101), said tapered lateral opening expanding towards said fan housing, and said tool rest having openings (114,134) therein for reducing its wind resistance, the motor shaft (203) extending through the lateral opening in the guard housing (116) and into the fan housing (101), a centrifugal fan (100) carried by an extension of motor shaft (203) in the fan housing (101), adjacent said tapered lateral opening, the fan housing (101) having a portion extending rearwardly there from and away from a position at which an operator would use the grinder, a common filter housing (105,125) secured to the main housing (200) rearwardly thereof in close proximity to said motor, the filter housing comprising two sections (105,125) connected to a central connective socket (104) and associated with the respective dust-collection systems, conduit means (110) connecting the rearwardly-extending portion of the fan housing (101) with the filter housing (105,125), the filter housing (105,125) having a plurality of air exhaust openings (107,127) formed therein, and filters (109,129) supported within the respective sections of the filter housing (105,125) by supporting nets (108,128) located inwardly of the air exhaust openings (107,127) therein, the supporting nets (108,128) being located by said central connection socket (104), whereby the fan draws the dust-laden air axially of the motor shaft and through the tapered lateral openings (113) in the annular covers (112) away from said motor (100) and said abrasive wheels (202) and into the fan housings (101), whereby the dust-laden air passes rearwardly into the rearwardly-extending portion of the fan housings (101) and then into the filter housings (105,125), and whereby the air thereafter passes through the filters (109,129) and out of the air exhaust openings (107,127) in the filter housing (105,125).

2. A grinder according to claim 1 wherein the filter housing (105,125) has a top semi-cylindrical portion (129) having the air exhaust openings (107,127) formed therein, and wherein the filter (109) is relatively thin and substantially semi-cylindrical and is supported within the top semi-cylindrical portion of the filter housing substantially beneath the air exhaust openings (107,127) formed therein, the axis of said semi-cylindrical filter housing (129) being parallel to the shaft (203) of the motor (200) and abrasive wheels.

## Patentansprüche

1. Eine Werkbank-Schleifmaschine mit einem Haupt-Gehäuse (200), welches einen Motor mit einer zweiseitigen Welle (203), die ein Schleifrad (201, 201) an jedem Ende trägt, einschließt, jedes Schleifrad ist versehen mit einem Schutzgehäuse (116), das mit dem Hauptgehäuse (200) verbunden ist und das Schleifrad umgibt, ein Staubsammelsystem mit einem Lüftergehäuse (101), seitlich angeschlossen an das Lüftergehäuse (116), das Schutzgehäuse (116) hat eine Werkzeugstütze (115, 135) an der Arbeitsöffnung und eine ringförmige Abdeckung (112) mit einer sich erweiternden seitlichen Öffnung (113) zur Verbindung mit dem Lüftergehäuse (101), welche seitliche Öffnung sich erweitert zu dem Lüftergehäuse, die Werkzeugauflagen(n) hat/haben Öffnungen (114,134) zur Verminderung des Strömungswiderstandes, die Motorwelle (103) erstreckt sich durch die seitlichen Öffnungen des Schutzgehäuses (116) und in das Lüftergehäuse (101), ein Zentrifugallüfter (100), getragen von einer Verlängerung der Motorwelle (203) in dem Lüftergehäuse (101), benachbart der erweiterten seitlichen Öffnung, das Lüftergehäuse (101) hat einen sich nach rückwärts erstreckenden Teil fort von einer Stelle, wo ein Benutzer die Schleifmaschine benutzen würde, ein gemeinsames Filtergehäuse (105,125) verbunden mit dem Hauptgehäuse (200), rückwärtig in enger Nachbarschaft zu dem Motor, das Filtergehäuse umfaßt zwei Abschnitte (105, 125), die verbunden sind mit einem zentralen Verbindungssockel (104) und verbunden mit den zugehörigen Staubsammel-Systemen, Leitungsmittel (110) verbinden den sich nach rückwärts erstreckenden Teil des Ventilatorgehäuses (101) mit dem Filtergehäuse (105, 125), das Filtergehäuse (105, 125) hat eine Vielzahl von Luftauslaßöffnungen (107, 127) und Filter (109, 129) sind getragen innerhalb der zugehörigen Abschnitte des Filtergehäuses (105, 125) von Stütznetzen (108, 128), die angeordnet sind innerhalb der Auslaßöffnungen (107, 127), die Stütznetze (108, 128) sind lokalisiert durch den zentralen Stützsockel (104), wodurch der Ventilator die staubbeladene Luft axial längs der Motorwelle absaugt durch die erweiterten seitlichen Öffnungen (113) in der ringförmigen Abdeckung (112) fort von dem Motor (100) und von den Schleifrädern (102) und in das Lüftergehäuse (101), wodurch die staubbeladene Luft nach rückwärts hinduchtritt in den sich nach rückwärts erstreckenden Teil des Lüftergehäuses (101) und dann in das Filtergehäuse (105, 125), und wobei die Luft dann durch die Filter (109, 129) und durch die Luftauslaßöffnungen (107, 127) des Filtergehäuses (105, 125) nach außen hindurchtritt.

2. Schleifmaschine nach Anspruch 1, wobei das Filtergehäuse (105, 125) einen oberen, halbzylindrischen Teil (129) mit Luftauslaßöffnungen (107, 127) aufweist, und wobei das Filter (109) relativ dünn ist und im wesentlichen halbzylindrisch und getragen ist innerhalb des halbzylindrischen Teiles des Filtergehäuses unterhalb der Luftauslaßöffnungen (107, 127), wobei die Achse des halbzylindrischen Filtergehäuses (127) parallel zur Motorwelle (203) des Schleifmaschinenmotors (200) ist.

## Revendications

1. Meuleuse d'établi comprenant un carter principal (200) renfermant un moteur ayant un arbre (203) à deux extrémités, portant une meule (201, 202) à chaque extrémité, chaque meule étant munie d'un carter de protection (116) fixé au carter principal (200) et entourant la meule, un système collecteur de poussières comprenant une enveloppe (101) de ventilateur fixée au carter de protection (116) de la meule latéralement à celui-ci, le carter de protection (116) ayant un porte-outil (115, 135) situé au niveau d'une ouverture et un capot annulaire (112) dans lequel est ménagée une ouverture latérale conique (113) offrant une communication avec l'enveloppe (101) de ventilateur, ladite ouverture latérale conique (113) s'élargissant en direction de ladite enveloppe de ventilateur, et ledit porte-outil étant percé d'ouvertures (114, 134) pour réduire sa résistance à l'air, l'arbe (203) du moteur traversant l'ouverture latérale du carter de protection (116) jusque dans l'enveloppe (101) de ventilateur, un ventilateur centrifuge (100) porté par un prolongement de l'arbe (203) du moteur à l'intérieur de l'enveloppe (101) de ventilateur, adjacente à ladite ouverture latérale conique, l'enveloppe (101) du ventilateur ayant une partie s'étendant vers l'arrière en direction opposée de la position dans laquelle un utilisateur utiliserait la meuleuse, une gaine (105, 125) de filtre commune fixée au carter principal (200) en arrière de celui-ci et à proximité immédiate dudit moteur, la gaine du filtre comprenant deux parties (105, 125) réunies à une douille centrale de raccordement (104) et associées aux systèmes collecteurs de poussière respectifs, des moyens de canalisation (110) reliant la partie s'étendant vers l'arrière de l'enveloppe (101) du ventilateur à la gaine (105, 125) reunies a une filtre, la gaine (105, 125) de filtre étant percée d'une pluralité d'ouvertures d'évent (107, 127), et des filtres (109, 129) portés à l'intérieur des parties respectives de la gaine (105, 125) de filtre par des treillis (108, 128) de support situés vers l'interieur par rapport aux overtures d'évent (107, 127), les treillis de support (108, 128) étant situés à côté de ladite douille centrale de raccordement (104), dans laquelle le ventilateur aspire dudit moteur (100) et desdites meules (202) l'air chargé de poussières axialement à l'arbre du moteur et au travers des ouvertures latérales coniques (113) des capots annulaires (112) et l'amène dans les enveloppes (101) des ventilateurs, dans laquelle l'air chargé de poussière passe vers l'arrière dans la partie s'étendant vers l'arriere des enveloppes (101) des ventilateurs puis dans les gaines (105, 125) des filtres, et dans laquelle l'air traverse ensuite les filtres (109, 129) et ressort par les ouvertures d'évent (107, 127) des gaines (105, 125) des filtres.

2. Meuleuse selon la Revendication 1, dans laquelle la gaine (105, 125) de filtre possède une partie supérieure hémicylindrique (129) dans laquelle sont formées les ouvertures d'évent (107, 127) et dans laquelle le filtre (109) est relativement mince et sensiblement hémicylindrique et est maintenu à l'intérieur de la partie supérieure hémicylindrique de la gaine du filtre sensiblement endessous des ouvertures d'évent (107, 127) qui y sont ménagées, l'axe de ladite gaine hémicylindrique (129) de filtre étant parallèle à l'arbre (203) du moteur (200) et des meules.
